# EUROPÄISCHE PATENTSCHRIFT

(11) **EP 1 780 065 B1**
(45) Veröffentlichungstag und Bekanntmachung des Hinweises auf die Patenterteilung: **17.03.2010**
(21) Anmeldenummer: 06021934.2
(22) Anmeldetag: 19.10.2006
(51) Int. Cl.: B60J 7/14

(54) **Hardtop-Fahrzeugdach mit außen angeordneter Dachkinematik**
Hardtop vehicle roof with externally arranged roof kinematic
Toit rigide de véhicule avec cinématique de toit extérieur

(30) Priorität: 26.10.2005 DE 102005051648
(43) Veröffentlichungstag der Anmeldung: 02.05.2007
(73) Patentinhaber: Magna Car Top Systems GmbH, 74321 Bietigheim-Bissingen (DE)
(72) Erfinder: Wezyk, Wojciech, 71065 Sindelfingen (DE)

(56) Entgegenhaltungen:
- EP-A2- 1 302 351
- DE-A1- 10 229 808
- DE-A1- 10 348 726
- DE-B3- 10 251 961
- DE-B3- 10 351 062

## Beschreibung

Die Erfindung betrifft ein Hardtop-Fahrzeugdach mit mindestens zwei starren Dachteilen gemäß dem Oberbegriff des Anspruches 1.

Ein aus der EP 1 463 647 B1 bekanntes Hardtop-Fahrzeugdach weist drei starre Dachteile auf, wobei das vordere und das hintere Dachteil mithilfe von Relativkinematiken relativ zu dem mittleren Dachteil verschwenkbar sind. Das mittlere Dachteil ist mittels einer Verstellkinematik an der Karosserie angelenkt. In Ablageposition sind sämtliche Dachteile gleichsinnig in einem Dachteilpaket in einem Ablageraum mit Verdeckkastendeckel abgelegt. Dadurch, dass bei dem bekannten Hardtop-Fahrzeugdach eine Schichtung des Dachteilpaketes mit Ablage von vorderem und hinterem Dachteil oberhalb des mittleren Dachteiles vorgenommen wird, kann das mittlere Dachteil während der Bildung des Dachteilpaketes seine Lage beibehalten, wodurch Beeinträchtigungen des Fahrzeuginnenraumes durch die Paketbildung vermieden werden. Dennoch benötigt die Dachkinematik viel Platz im Fahrzeuginnenraum, so dass die Kopffreiheit der Insassen bei geschlossenem Hardtop-Fahrzeugdach relativ eingeschränkt ist.

Aus der DE 41 00 677 C2 ist ein Fahrzeugdach, bestehend aus zwei Dachteilen bekannt. Das vordere Dachteil kann zwischen einer Schließposition und einer Öffnungsposition verstellt werden. Hierzu ist das vordere Dachteil mittels Viergelenkkinematiken auf Seitenträgern montiert, die in nach oben offene Aufnahmekanäle im hinteren Dachteil verschoben werden können. Die Seitenträger, die Teil der Dachkinematik sind, befinden sich in Schließstellung des Fahrzeugdaches im Fahrzeuginnenraum und beeinträchtigen damit die Kopffreiheit der Insassen.

Bei einem Hardtop-Fahrzeugdach der eingangs genannten, aus der EP 1 302 351 A2 bekannten Art sind die über Dachteilkinematiken verbundenen Dachteile aus ihrer Schließposition in eine Ablageposition zu verstellen, in der sie einen Dachteilstapel bilden. Die Verstellung der Dachteile zueinander erfolgt über als Lenkerkinematiken ausgebildete Dachteilkinematiken, von denen die zwischen dem mittleren und dem vorderen Dachteil des dreiteiligen Hardtops Vorgesehene als Viergelenkkinematik ausgebildet ist und einen vorderen unteren Lenker aufweist, der innenseitig zum Dach an einem nach vorne auskragenden Anlenkfortsatz des mittleren Dachteiles angelenkt ist. Weiter weist die Viergelenkkinematik einen hinteren, oberen Lenker auf, der außenseitig zum mittleren Dachteil in einer rinnenförmigen, längs durchlaufenden Vertiefung (Schweißgraben) dieses Dachteiles angelenkt ist. Die Vertiefung bildet in der Schließposition des Daches somit einen Aufnahmekanal, welcher rückwärtig zur Anlenkung des hinteren, oberen Lenkers in der Schließposition des Daches von einer Deckblende überdeckt ist, die beim Überführen des Daches in dessen Öffnungsposition über den Lenker in den Aufnahmekanal abgedrängt wird.

Der Erfindung liegt die Aufgabe zugrunde, bei einem Hardtop-Fahrzeugdach die Größe des Fahrzeuginnenraumes in Schließposition des Daches durch die Dachteilkinematik nicht negativ zu beeinflussen, und dies ohne Beeinträchtigung des äußeren Erscheinungsbildes des Fahrzeuges bei hoher Stabilität des Fahrzeugdaches.

Diese Aufgabe wird mit den Merkmalen des Anspruches 1 gelöst. Vorteilhafte Ausgestaltungen der Erfindung sind in den Unteransprüchen angegeben.

Der Erfindung liegt der Gedanke zugrunde, die gesamte Dachteilkinematik zur Verstellung zumindest eines Dachteiles derart anzuordnen, dass diese sich außerhalb des Fahrzeuginnenraumes befindet und dass deren Verschwenkbewegung vollständig außerhalb des Fahrzeuginnenraumes erfolgt.

Durch die Führung des mindestens einen verstellbaren Dachteiles von der Außenseite her mittels der Dachteilkinematik haben die Lenker der die Dachteilkinematik bildenden Lenkeranordnung keinen Kontakt mehr mit dem Passagierbereich, woraus mehr Kopffreiheit für die Insassen resultiert. Ferner ist die Sicherheit für die Insassen erhöht, da sich bei einem Unfall die Lenker der Dachteilkinematik nicht innerhalb des Fahrzeuginnenraums deformieren, wodurch Verletzungen der Insassen durch Verformungen der Lenker der Dachteilkinematik vermieden werden. Diesbezüglich ist es auch von Vorteil, dass die Dachteilkinematik in der Schließposition der Dachteile auf der Dachaußenseite abgestützt ist und zumindest teilweise auf dieser aufliegt.

Aufgrund der Ausbildung der Dachteilkinematik als Lenkeranordnung und der Anlenkung sämtlicher Lenker der Dachteilkinematik auf der Außenseite des einen, ersten Dachteiles innerhalb des Aufnahmekanals dieses Dachteiles lassen sich zudem etwaige zur Anlenkung der Lenker benötigte Konsolen innerhalb des Aufnahmekanals sichtgeschützt anordnen.

Die Aufnahme der Dachteilkinematik in Schließposition des Hardtop-Fahrzeugdaches in mindestens einem auf der Außenseite zumindest eines Dachteiles vorgesehenen, in Fahrzeuglängsrichtung etwa parallel zur Dachaußenseite verlaufenden, oben offenen Aufnahmekanal kann auch zur Verbesserung des ästhetischen Gesamteindrucks beitragen. Je nach Höhe des Aufnahmekanals ist die Dachteilkinematik in Schließposition nicht oder nur teilweise sichtbar und auf der Außenseite eines Dachteiles innerhalb des zumindest einen dort angeordneten Aufnahmekanals aufgenommen. Durch die Ablage der Dachteilkinematik in mindestens einem Aufnahmekanal kann die Dachteilkinematik zudem auch zusammen mit dem Dachteil Energie aufnehmen und sich zusammen mit diesem Dachteil verformen. Hierdurch wird die Stabilität des Hardtop-Fahrzeugdaches erhöht.

Bevorzugt ist die Tiefe des Aufnahmekanals derart bemessen, dass die Dachteilkinematik vollständig in den Aufnahmekanal versenkt werden kann. Eine flache Ausbildung des Aufnahmekanals kommt insbesondere dann in Frage, wenn lediglich ein einziger, sich über die ganze Dachbreite erstreckender Aufnahmekanal vorgesehen ist.

Mit Vorteil ist der Aufnahmekanal in das mindestens eine Dachteil eingeformt. Hierdurch ist der Aufnahmekanal gegenüber der Dachteiloberfläche nicht, oder nur wenig erhöht. Ferner erübrigt sich durch die Einformung des Aufnahmekanals in das Dachteil dessen Ausbildung als separates, auf der Dachaußenseite zu montierendes Bauteil.

Um ein Verschwenken der Dachteilkinematik über einen möglichst großen Bereich zu ermöglichen, ist es von Vorteil, wenn sich der Aufnahmekanal von einem vorderen, in Fahrtrichtung weisenden Rand bis zu einem hinteren, entgegen der Fahrtrichtung weisenden Rand eines Dachteils erstreckt.

Das ästhetische Erscheinungsbild des Hardtop-Fahrzeugdaches kann dadurch verbessert werden, dass der Aufnahmekanal, vorzugsweise mittels mindestens eines Deckels, verschließbar ausgebildet ist. Insbesondere in Schließposition ist der Aufnahmekanal verschlossen, so dass die darin befindliche Dachkinematik vollkommen sichtgeschützt ist. Gleichzeitig werden durch das Verschließen des Aufnahmekanals negative Witterungseinflüsse auf die Dachkinematik vermieden. Der Deckel zum Verschließen des Aufnahmekanals kann beispielsweise klappbar oder verschiebbar an dem Dachteil mit dem Aufnahmekanal montiert sein. Sinnvoll ist es, die Öffnungs- und Schließbewegung des Deckels mit der Öffnungs- und Schließbewegung der Dachteilkinematik zu koppeln, beispielsweise derart, dass zu Beginn der Öffnungsbewegung eines Dachteils eine Öffnung des Aufnahmekanals erfolgt und dass der Aufnahmekanal bei der Beendigung des Schließvorganges des Dachteils zwangsgekoppelt geschlossen wird. Bevorzugt verläuft zumindest eine Schwenkachse des Deckels in Fahrzeuglängsrichtung.

Eine besonders Platz sparende Ablagemöglichkeit für die Dachteile ergibt sich dadurch, dass die Dachteile in Ablageposition übereinander liegen und ein Dachteilpaket bilden.

Es ist von Vorteil, wenn mindestens ein Lenker, vorzugsweise sämtliche Lenker, der Dachteilkinematik an mindestens einem das zweite Dachteil in Richtung des ersten Dachteils überragenden Anlenkfortsatz des zweiten Dachteils angelenkt sind. Mit Vorteil kommt der Anlenkfortsatz des zweiten Dachteils in Schließposition auf der Außenseite des ersten Dachteiles, vorzugsweise innerhalb des Aufnahmekanals des ersten Dachteiles, zum Liegen. Insbesondere stützt sich der Anlenkfortsatz des zweiten Dachteils auf der Außenseite des ersten Dachteils, vorzugsweise innerhalb des Aufnahmekanals des ersten Dachteils, ab, wodurch die Stabilität des gesamten Hardtop-Fahrzeugdaches, insbesondere in Schließposition, erhöht wird.

In Weiterbildung der Erfindung ist vorgesehen, dass der Anlenkfortsatz des zweiten Dachteils, an dem zumindest ein Lenker der Dachteilkinematik des ersten Dachteils angelenkt ist, einen Abdeckschenkel aufweist. Dieser Abdeckschenkel ist oberhalb der Anlenkstelle der Lenker der Dachteilkinematik angeordnet und schließt den Anlenkfortsatz auf der Oberseite ab. Der Abdeckschenkel dient zum Verschließen des Aufnahmekanals in Schließposition der Dachteile. Der Anlenkfortsatz verschließt den Aufnahmekanal in Schließposition mittels des Abdeckschenkels. In diesem Bereich ist kein separater Verschlussdeckel zum Verschließen des Aufnahmekanals notwendig.

In Ausgestaltung der Erfindung ist vorgesehen, dass ein zur Verstellung der Dachteilkinematik benötigter Antrieb zwischen der Außenseite eines Dachteils und der Dachinnenverkleidung des Dachteils angeordnet ist. Der Antrieb ist somit zum einen regengeschützt unterhalb der Dachaußenseite angeordnet und andererseits ragt der Antrieb nicht in den Fahrzeuginnenraum hinein, sondern ist von der Dachinnenverkleidung sichtgeschützt.

Der Antrieb ist sandwichartig innerhalb des Dachteils aufgenommen.

Für eine möglichst flache Ausgestaltung des Dachteils ist es von Vorteil, wenn der Antrieb als Drehantrieb ausgebildet ist.

Eine Vielzahl von unterschiedlichen Verstellmöglichkeiten wird erhalten, wenn die Dachteilkinematik mindestens eine Mehrgelenkkinematik, insbesondere eine Viergelenkkinematik, umfasst. Mit Vorteil ist die gesamte Mehrgelenkkinematik in Schließposition innerhalb eines oder mehrerer auf der Außenseite mindestens eines Dachteils befindlicher Aufnahmekanäle versteckt.

In Ausgestaltung der Erfindung ist vorgesehen, dass eine Mehrgelenkkinematik, vorzugsweise eine Viergelenkkinematik in Fahrzeugquerrichtung gesehen mittig an zwei benachbarten Dachteilen angelenkt ist. Über diese auf der Längsmittelachse des Fahrzeugdaches befindliche Mehrgelenkkinematik erfolgt bevorzugt die Krafteinleitung. Seitlich der mittigen Mehrgelenkkinematik können bei Bedarf Stützlenker vorgesehen werden, die die beiden Dachteile ebenfalls gelenkig miteinander verbinden.

In Ausgestaltung der Erfindung umfasst die Dachteilkinematik mindestens zwei beabstandete Mehrgelenkkinematiken, insbesondere Viergelenkkinematiken. Mit Vorteil sind die beiden Mehrgelenkkinematiken im seitlichen Dachbereich angeordnet und symmetrisch ausgebildet.

Gemäß einer alternativen Ausführungsform besteht die Dachteilkinematik aus einer einzigen Viergelenkkinematik, wobei die Viergelenkkinematik von zwei beabstandeten Einzellenkern gebildet ist. Hierdurch ist die Dachteilkinematik auf ein Mindestmaß an Bauteilen reduziert.

In Weiterbildung der Erfindung ist vorgesehen, dass die beiden Einzellenker sowohl in Fahrzeuglängsrichtung als auch in Fahrzeugquerrichtung beabstandet zueinander angeordnet sind. Hierdurch ist es nicht wie üblich notwendig, mindestens zwei Lenker übereinander abzulegen, wodurch sich die Aufnahmekanäle zur Aufnahme der Lenker flacher ausbilden lassen. Mit Vorteil ist zu beiden Seitenbereichen eines Dachteils jeweils ein Einzellenker angeordnet. Es ist von Vorteil, wenn sowohl die Anlenkpunkte der Einzellenker am ersten Dachteil, als auch die Anlenkpunkte der Einzellenker am zweiten Dachteil in Fahrzeuglängsrichtung zueinander versetzt angeordnet sind. Die Drehgelenke sollten derart ausgebildet sein, dass diese auch Kräfte in Fahrzeugquerrichtung aufnehmen können.

Gemäß einer alternativen Ausgestaltung ist vorgesehen, dass die Einzellenker der einzigen Viergelenkkinematik lediglich in Fahrzeuglängsrichtung zueinander beabstandet und auf der Längsmittelachse des Fahrzeugdachs angeordnet sind. Auf seitliche Stützlenker wird gemäß dieser Ausführungsvariante verzichtet. Die beiden Dachteile sind ausschließlich über die beiden in Fahrzeuglängsrichtung beabstandeten Einzellenker miteinander verbunden.

Gemäß einer bevorzugten Ausführungsform ist das erfindungsgemäße Hardtop-Fahrzeugdach als dreiteiliges Dach mit einem in Schließposition vorderen, mittleren und hinteren Dachteil ausgebildet. Dabei ist es vorteilhaft, wenn die drei Dachteile zu einem Dachteilpaket zusammenlegbar ausgebildet sind.

Gemäß einer ersten Alternative des dreiteiligen Hardtop-Fahrzeugdaches sind sowohl im mittleren, als auch im hinteren Dachteil mindestens ein, vorzugsweise zwei beabstandete Aufnahmekanäle, vorgesehen. Der mindestens eine Aufnahmekanal im mittleren Dachteil dient zur Aufnahme der Dachkinematik zwischen dem vorderen und dem mittleren Dachteil, der mindestens eine Aufnahmekanal im hinteren Dachteil dient zur Aufnahme der Dachteilkinematik zwischen dem hinteren und dem mittleren Dachteil in Schließposition.

Bevorzugt ist mindestens ein Lenker, vorzugsweise sämtliche Lenker, der Dachteilkinematik zwischen dem vorderen und dem mittleren Dachteil einerseits auf der Dachaußenseite des mittleren Dachteils und andererseits an einem in Richtung des mittleren Dachteils weisenden Anlenkfortsatz des vorderen Dachteils angelenkt. Falls auf der Außenseite des mittleren Dachteils ein Aufnahmekanal vorgesehen ist, ist es vorteilhaft, mindestens einen Lenker, vorzugsweise sämtliche Lenker der Dachteilkinematik, zwischen dem vorderen und dem mittleren Dachteil innerhalb des Aufnahmekanals, bzw. innerhalb der Aufnahmekanäle, anzulenken. Die Anlenkfortsätze werden mit Vorteil innerhalb der Aufnahmekanäle in Schließposition aufgenommen. In analoger Weise ist die Dachteilkinematik zwischen dem hinteren und dem mittleren Dachteil angeordnet. Für den Fall, dass im hinteren Dachteil mindestens ein Aufnahmekanal für diese Dachteilkinematik vorgesehen ist, ist es von Vorteil, wenn mindestens ein Lenker, vorzugsweise sämtliche Lenker der Dachteilkinematik, innerhalb des Aufnahmekanals angelenkt sind. Mit dem anderen Ende sind die Lenker an mindestens einem in Richtung hinterem Dachteil weisenden Anlenkfortsatz des mittleren Dachteils angelenkt. Mittels der Dachteilkinematiken sind die drei Dachteile zu einem Dachteilpaket stapelbar. Bevorzugt sind alle drei Dachteile in Ablageposition gleichsinnig mit nach oben gerichteter Dachaußenseite im Dachteilpaket abgelegt.

Gemäß einer alternativen Ausgestaltung des dreiteiligen Hardtopdaches ist eine Dachteilkinematik zwischen dem vorderen und dem mittleren Dachteil vorgesehen, wobei diese Dachteilkinematik in Schließposition auf der Außenseite des mittleren Dachteils, vorzugsweise innerhalb eines Aufnahmekanals auf der Außenseite des mittleren Dachteils, angelenkt. Zusätzlich sind die Lenker dieser Dachteilkinematik mit mindestens einem Anlenkfortsatz des vorderen Dachteils gelenkig verbunden. Das vordere und das mittlere Dachteil sind in Ablageposition gleichsinnig mit nach oben gerichteter Dachaußenseite im Dachteilpaket abgelegt. Das hintere Dachteil ist erfindungsgemäß gegensinnig zu den anderen Dachteilen mit nach unten gerichteter Dachaußenseite im Dachteilpaket an unterster Stelle abgelegt.

Um das Dachteilpaket möglichst Platz sparend zu verstauen, ist in Ausgestaltung der Erfindung vorgesehen, dass das Dachteilpaket in einem Ablageraum, vorzugsweise mit Verdeckkastendeckel, ablegbar ist.

Gemäß einer besonders zweckmäßigen Weiterbildung der Erfindung ist vorgesehen, dass in mindestens einem vorzugsweise verstellbaren Dachteil, vorzugsweise in zwei Dachteilen, ein Schiebedach integriert ist. Das Schiebedach ist in Schließposition des Hardtop-Fahrzeugdaches bzw. der Dachteile zu öffnen. Es kann also zwischen einem Schiebedachbetrieb, einem Cabrioletbetrieb und einem Coupébetrieb gewählt werden.

Weitere Vorteile und zweckmäßige Ausführungen sind den weiteren Ansprüchen, der Figurenbeschreibung und den Zeichnungen zu entnehmen. Es zeigen:
- Fig. 1: ein Fahrzeug mit einem dreiteiligen Hardtop-Fahrzeugdach in Schließposition,
- Fig. 2: eine Schnittdarstellung entlang der Schnittlinie A-A gemäß Fig. 1 durch das mittlere Dachteil,
- Fig. 3: das Fahrzeug gemäß Fig. 1 mit dreiteiligem Hardtop-Fahrzeugdach in Schließposition, mit auf der Außenseite des mittleren und des hinteren Dachteils angeordneten Aufnahmekanälen für die Dachteilkinematik,
- Fig. 4: ein dreiteiliges Hardtop-Fahrzeugdach in einer Zwischenposition während der Verstellbewegung mit jeweils einer aus zwei Viergelenkkinematiken bestehenden Dachteilkinematiken zwischen dem vorderen und dem mittleren sowie zwischen dem mittleren und dem hinteren Dachteil,
- Fig. 5: das Fahrzeug gemäß Fig. 1 und Fig. 3 mit einem in einer Zwischenposition befindlichen Hardtop-Fahrzeugdach während der Verstellbewegung,
- Fig. 6: eine weitere Zwischenposition eines Hardtop-Fahrzeugdaches während der Verstellbewegung,
- Fig. 7: eine Schnittdarstellung entlang der Schnittlinie A-A gemäß Fig. 6, jedoch bei in Schließposition befindlichem Fahrzeugdach,
- Fig. 8: ein dreiteiliges Hardtop-Fahrzeugdach in einer Zwischenposition während der Verstellbewegung kurz vor Erreichen der Ablageposition,
- Fig. 9: das Hardtop-Fahrzeugdach in Ablageposition, wobei die drei Dachteile gleichsinnig in einem Dachteilpaket in einem Ablageraum verstaut sind,
- Fig. 10: ein alternatives, dreiteiliges Hardtop-Fahrzeugdach, bei dem die Dachteilkinematik zwischen dem vorderen und dem mittleren Dachteil sowie die Dachteilkinematik zwischen dem mittleren und dem hinteren Dachteil jeweils lediglich aus einer einzigen Viergelenkkinematik besteht, wobei jede Viergelenkkinematik aus zwei in Fahrzeugquerrichtung und in Fahrzeuglängsrichtung beabstandeten Einzellenkern gebildet ist,
- Fig. 11: eine Schnittdarstellung entlang der Schnittlinie A-A gemäß Fig. 10,
- Fig. 12: eine weitere Alternative eines dreiteiligen Hardtop-Fahrzeugdaches, bei dem das vordere und das mittlere Dachteil gleichsinnig und das hintere Dachteil gegensinnig zu dem vorderen und dem mittleren Dachteil in Ablageposition ablegbar ist,
- Fig. 13: das Hardtop-Fahrzeugdach gemäß Fig. 12 in einer Zwischenposition während der Verstellbewegung zwischen Schließposition und Ablageposition,
- Fig. 14: das Hardtop-Fahrzeugdach gemäß Fig. 12 und Fig. 13 in Ablageposition innerhalb eines Ablageraumes mit Verdeckkastendeckel,
- Fig. 15: eine weitere Alternative eines dreiteiligen Hardtop-Fahrzeugdaches, bei dem die Dachteilkinematik zwischen dem vorderen und dem mittleren Dachteil aus einer einzigen Viergelenkkinematik gebildet ist, wobei die Viergelenkkinematik aus zwei in Fahrtrichtung beabstandeten Lenkern besteht und auf der Längsmittelachse des Fahrzeugdaches angeordnet ist,
- Fig. 16: eine vergrößerte Darstellung des Fahrzeugdaches gemäß Fig. 15, und
- Fig. 17: eine weitere Alternative eines dreiteiligen Hardtop-Fahrzeugdaches mit integrierten Schiebedachteilen.

In den Figuren sind gleiche Bauteile und Bauteile mit gleicher Funktion mit dem gleichen Bezugszeichen gekennzeichnet.

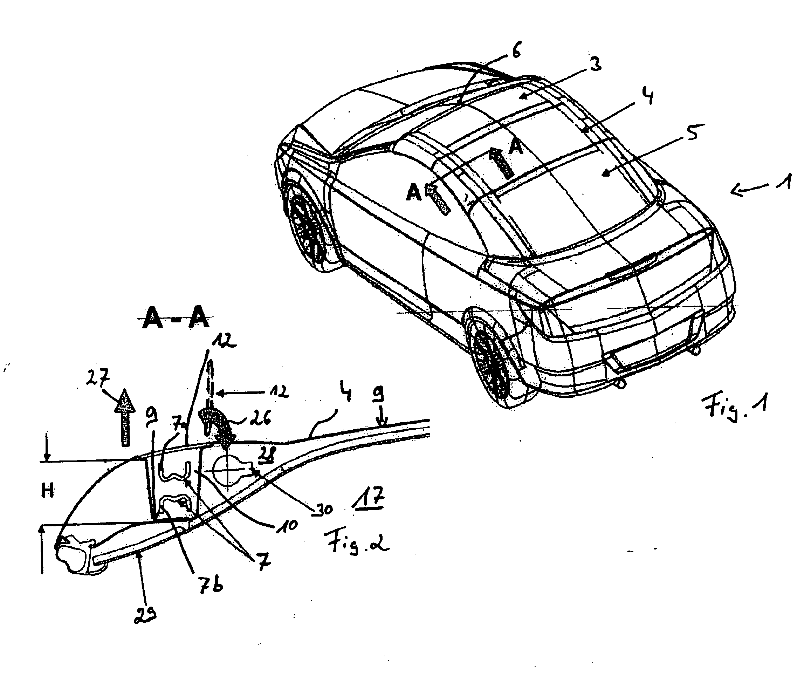

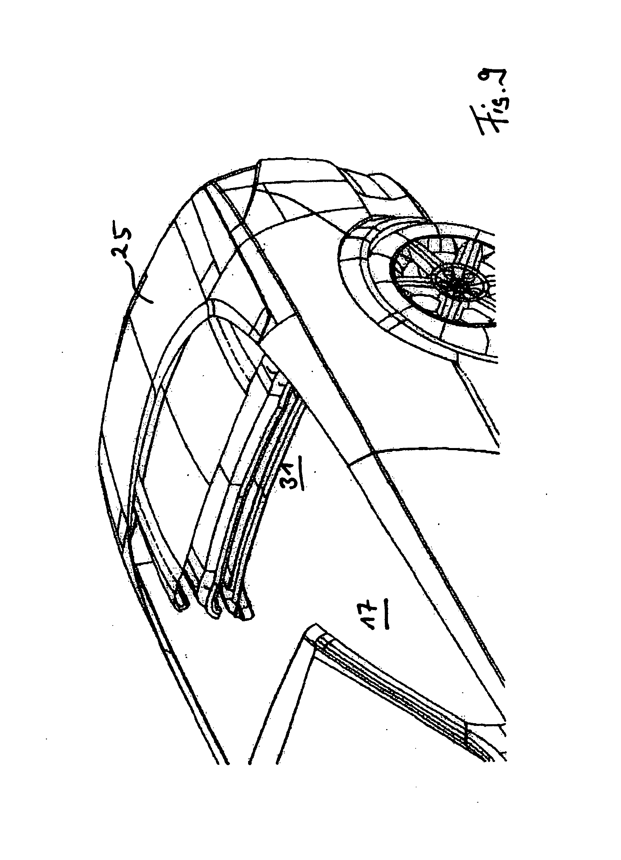

In Fig. 1 ist ein Fahrzeug 1 in einer perspektivischen Ansicht von schräg hinten dargestellt. Das Fahrzeug 1 weist ein dreiteiliges Hardtop-Fahrzeugdach 2, bestehend aus drei Dachteilen 3, 4, 5, auf. Die drei Dachteile 3, 4, 5 sind zwischen der in Fig. 1 dargestellten Schließposition und der in Fig. 9 dargestellten Ablageposition verstellbar. In der in Fig. 1 dargestellten Schließposition sind die drei starren Dachteile 3, 4, 5 hintereinander angeordnet. Das vordere Dachteil 3 ist in Schließposition mit einem Windschutzscheibenrahmen 6 verriegelt. Das mittlere Dachteil 4 ist gelenkig sowohl mit dem vorderen Dachteil 3, als auch mit dem hinteren Dachteil 5 verbunden.

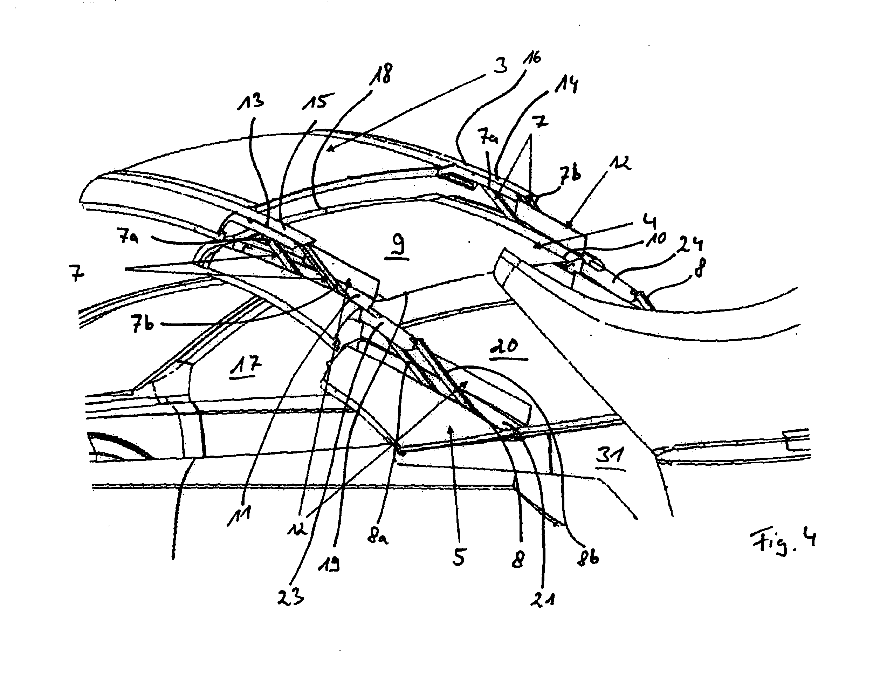

Wie insbesondere aus Fig. 4 ersichtlich ist, sind zum relativen Verstellen der Dachteile 3, 4, 5 zueinander zwei Dachteilkinematiken 7, 8 vorgesehen. Die zwischen dem vorderen und dem mittleren Dachteil angeordnete Dachteilkinematik 7 besteht aus zwei beabstandeten Viergelenkkinematiken. In analoger Weise besteht die Dachteilkinematik 8 zwischen dem mittleren und dem hinteren Dachteil 4, 5 ebenfalls aus zwei beabstandeten Viergelenkkinematiken.

Jede Viergelenkkinematik der vorderen Dachteilkinematik 7 besteht aus zwei in Fahrzeuglängsrichtung beabstandeten Lenkern 7a, 7b. In analoger Weise bestehen die beiden in Querrichtung beabstandeten Viergelenkkinematiken der Dachteilkinematik 8 ebenfalls aus jeweils einem vorderen Lenker 8a und einem davon beabstandeten hinteren Lenker 8b.

Auf der Außenseite 9 des mittleren Dachteils 4 befinden sich zwei in Fahrzeuglängsrichtung verlaufende, oben offene Aufnahmekanäle 10, 11 zur Aufnahme sämtlicher Lenker 7a, 7b der Dachteilkinematik 7 in Schließposition, wie dies in Fig. 1 ersichtlich ist. Die Aufnahmekanäle sind mithilfe von klappbaren Deckeln 12 in Schließposition des Hardtop-Fahrzeugdaches 2 verschließbar. Die Aufnahmekanäle 10, 11 sind in das die Außenseite 9 des mittleren Dachteils 4 bildende Blech eingeformt.

Die Lenker 7a, 7b der Dachteilkinematik 7 sind innerhalb der Aufnahmekanäle 10, 11 mit Abstand zueinander angelenkt. Mit den gegenüberliegenden Enden sind die Lenker 7a, 7b gelenkig mit das vordere Dachteil 3 in Richtung des mittleren Dachteils 4 überragenden Anlenkfortsätzen 13, 14 gelenkig verbunden. Die Anlenkfortsätze 13, 14 sind im Querschnitt T-förmig ausgeformt. Der obere Querbalken jedes Anlenkfortsatzes 13, 14 stellt einen Abdeckschenkel 15, 16 zum Verschließen der Aufnahmekanäle 10, 11 im Bereich der Anlenkfortsätze 13, 14 in der in Fig. 1 dargestellten Schließposition dar. Die Anlenkfortsätze 13, 14 sind in Schließposition des Hardtop-Fahrzeugdaches 2 in den Aufnahmekanälen 10, 11 zusammen mit den Lenkern 7a, 7b aufgenommen. Die Verschwenkbewegung der Dachteilkinematik 7 findet ausschließlich außerhalb des Fahrzeuginnenraums 17 statt.

Das vordere Dachteil 3 stützt sich zum einen am Windschutzscheibenrahmen 6 und zum anderen am mittleren Dachteil 4 über die Anlenkfortsätze 13, 14 innerhalb der Aufnahmekanäle 10, 11, ab. Die Aufnahmekanäle erstrecken sich vom vorderen Rand 18 des mittleren Dachteils bis zum hinteren Rand 19 des mittleren Dachteils.

Das mittlere Dachteil 4 ist mit dem hinteren Dachteil 5 in analoger Weise wie das vordere Dachteil 3 mit dem mittleren Dachteil 4 verbunden. Auf der Außenseite 20 des hinteren Dachteils 5 sind zwei beabstandete, mit den Aufnahmekanälen 10, 11 in Längsrichtung fluchtende, sich über die gesamte Länge des hinteren Dachteils 5 erstreckende Aufnahmekanäle 21, 22 eingeformt. Die Aufnahmekanäle 21, 22 dienen zur Aufnahme der Lenker 8a, 8b der beiden Viergelenkkinematiken der hinteren Dachteilkinematik 8. Die Aufnahmekanäle 21, 22 sind in Schließposition mittels klappbarer Deckel 12 verschließbar. Die vorderen Lenker 8a und die hinteren Lenker 8b sind innerhalb der Aufnahmekanäle 21, 22 an nicht dargestellten Konsolen angelenkt. Mit den gegenüberliegenden Enden sind die Lenker 8a, 8b an Anlenkfortsätzen 23, 24 angelenkt. Die Anlenkfortsätze 23, 24 sind Teil des mittleren Dachteils 4 und überragen das mittlere Dachteil 4 in Richtung hinterem Dachteil 5. In Schließposition werden die Anlenkfortsätze 23, 24 in den Aufnahmekanälen 21, 22 zusammen mit den Lenkern 8a, 8b der hinteren Dachteilkinematik 8 aufgenommen. Die Anlenkfortsätze 23, 24 zwischen dem mittleren Dachteil 4 und dem hinteren Dachteil 5 weisen keine oberen Abdeckschenkel auf. Die Aufnahmekanäle 21, 22 sind vollständig mittels klappbarer Deckel in Schließposition verschließbar.

In Fig. 2 ist eine Schnittdarstellung entlang der Schnittlinie A-A gemäß Fig. 1 durch das mittlere Dachteil 4 dargestellt. Zu erkennen ist der in Fahrzeuglängsrichtung verlaufende Aufnahmekanal 10 zur Aufnahme der beiden Lenker 7a, 7b der vorderen Dachteilkinematik 7. Die Tiefe H des Aufnahmekanals 10 entspricht mindestens der Summe der Höhe beider Lenker 7a, 7b. Gezeigt ist die Lage der Lenker 7a, 7b in Schließposition auf der Außenseite 9, genauer ausgedrückt innerhalb des Aufnahmekanals 10, des mittleren Dachteils 4. Der Aufnahmekanal 10 ist mittels des Deckels 12 verschlossen. Der Deckel 12 kann in Pfeilrichtung 26 aufgeklappt werden, so dass der Aufnahmekanal 10 nach oben freigegeben wird. Nach dem Aufklappvorgang nimmt der Deckel 12 die vertikale, gestrichelt dargestellte Position ein.

Die beiden Lenker 7a, 7b können in Pfeilrichtung 27 aus dem Aufnahmekanal 10 heraus verschwenkt werden.

In einem Hohlraum 28 zwischen der Außenseite 9 des mittleren Dachteils 4 und einer den Fahrzeuginnenraum 17 begrenzenden Dachinnenverkleidung 29 ist ein als Drehantrieb ausgebildeter Antrieb 30 zum Verschwenken der Lenker 7a, 7b der Dachteilkinematik 7 angeordnet. Der Antrieb 30 befindet sich in der Zeichnungsebene rechts des Aufnahmekanals 10.

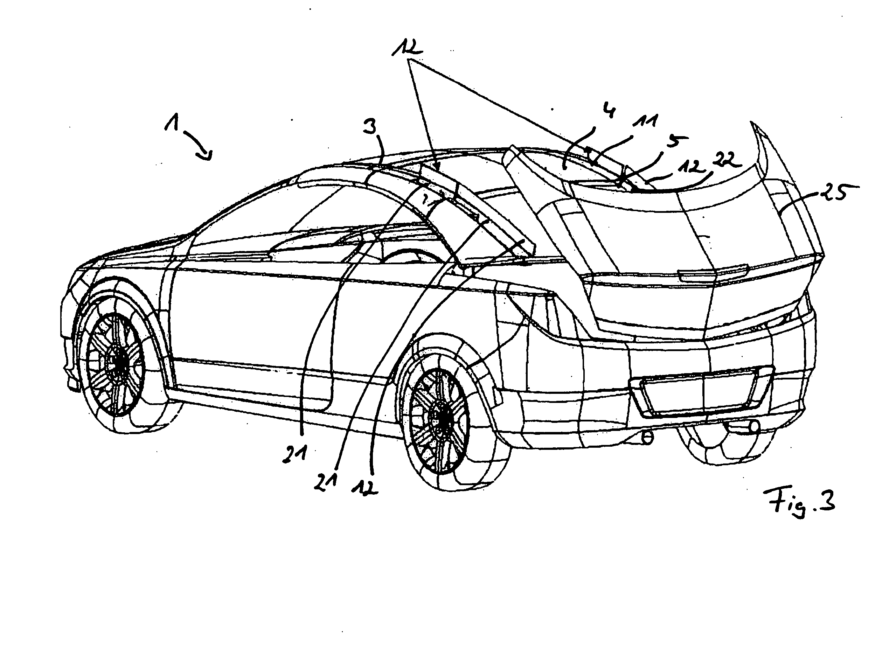

In der in Fig. 3 gezeigten perspektivischen Ansicht des Fahrzeugs 1 befinden sich die Dachteile 3, 4, 5 noch in Schließposition. Die Deckel 12 zum Verschließen der Aufnahmekanäle 10, 11, 21, 22 sind aus ihrer horizontalen Lage bereits in ihre Vertikalstellung verschwenkt, so dass die Aufnahmekanäle 10, 11, 21, 22 nach oben offen sind. Hierdurch können beide Dachteilkinematiken 7, 8 aus der gezeigten Schließposition nach außen herausgeschwenkt werden. Es findet keinerlei Beeinträchtigung des Fahrzeuginnenraums statt. Die gesamte Verschwenkbewegung aller Dachteilkinematiken findet außerhalb des Fahrzeuginnenraums statt. Kein Kinematikbauteil ragt in den Fahrzeuginnenraum hinein.

Wie insbesondere aus Fig. 4 ersichtlich ist, wird die Kopffreiheit für die Insassen durch die auf der Außenseite der Dachteile angeordneten Verstellkinematiken 7, 8 zu keiner Zeit beeinträchtigt.

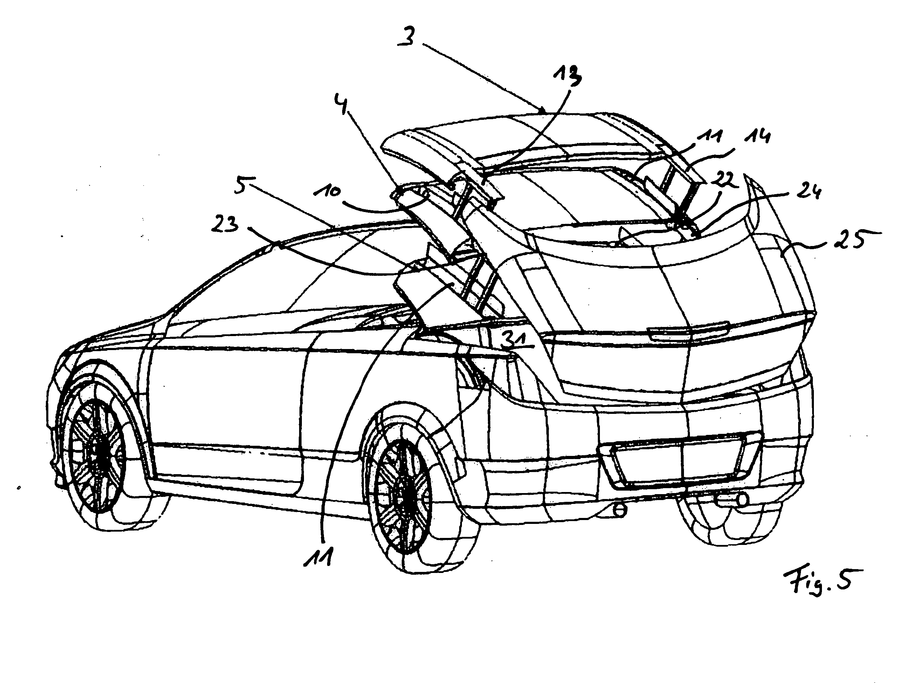

In Fig. 5 ist eine gegenüber der Fig. 4 weiter fortgeschrittene Zwischenposition während der Verstellbewegung von der in Fig. 1 dargestellten Schließposition in die in Fig. 9 gezeigte Ablageposition in einem Ablageraum 31 gezeigt. Noch sind die Dachteile 3, 4, 5 nicht aufeinander abgelegt. Die Lenker 7a, 7b sowie 8a, 8b der Dachteilkinematiken 7, 8 sind nahezu senkrecht zu dem mittleren und dem hinteren Dachteil 4, 5 ausgerichtet. Die Anlenkfortsätze 13, 14 und 23, 24 sind aus den Aufnahmekanälen 10, 11 sowie 21, 22 angehoben und in einer kombinierten rotatorisch-translatorischen Bewegung in Richtung Fahrzeugheck verschwenkt.

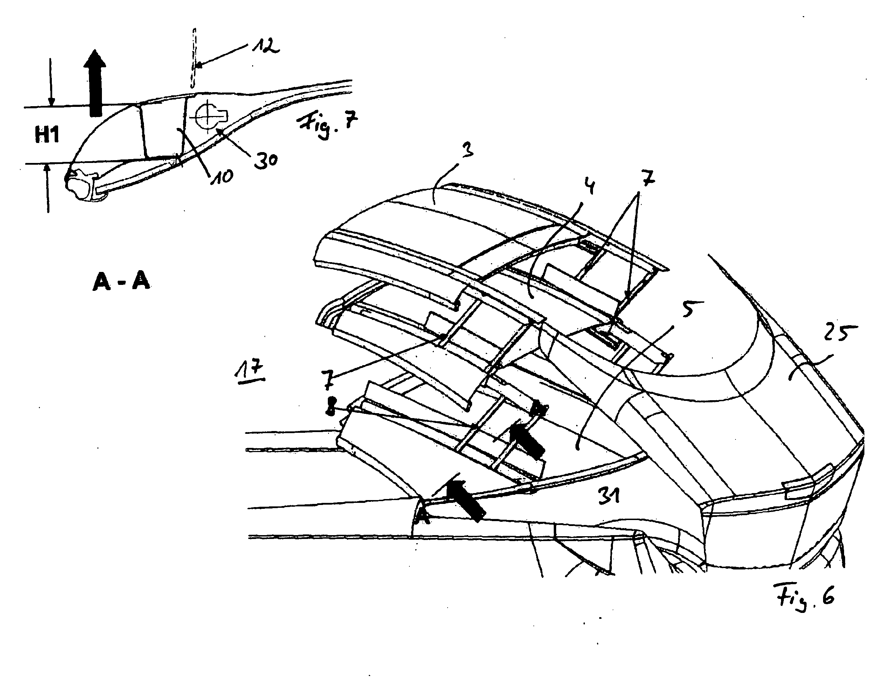

In Fig. 6 ist die Dachteilpaketstellung nahezu erreicht. Der Fahrzeuginnenraum 17 ist nahezu vollständig freigegeben.

In Fig. 7 ist eine Schnittdarstellung entlang der Schnittlinie A-A dargestellt. Zu erkennen ist der aufgeklappte Deckel 12, der den Aufnahmekanal 10 nach oben freigibt. Innerhalb des Aufnahmekanals 10 sind keine Lenker 7a, 7b zu erkennen, da die Lenker um die in Querrichtung durch den Aufnahmekanal verlaufenden Drehachsen nach oben verschwenkt sind, wodurch die Dachteile 3, 4, 5 in Richtung Ablageposition bewegt werden.

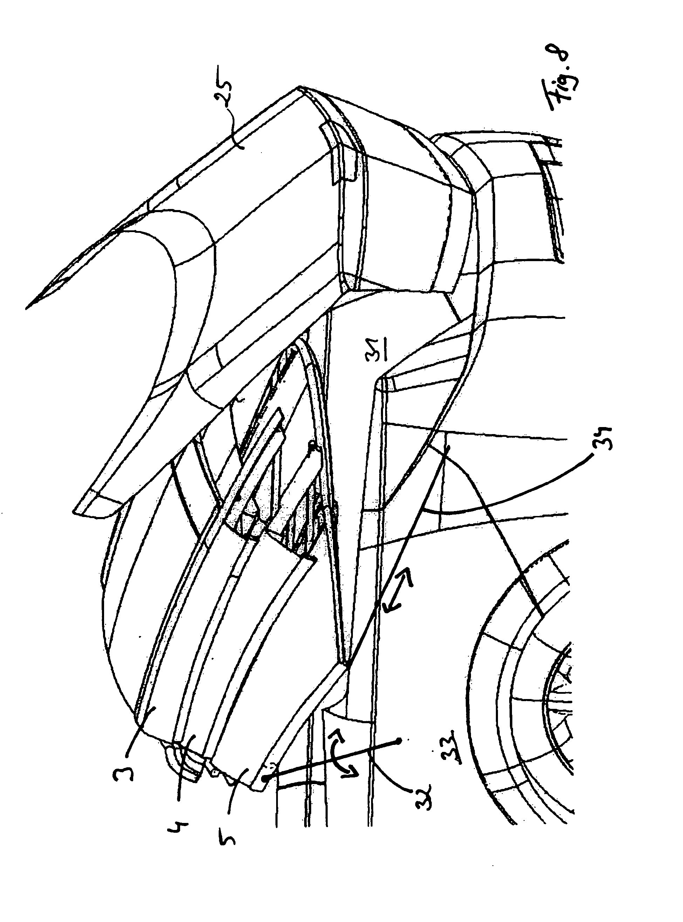

In der in Fig. 8 dargestellten Zwischenposition ist die Dachteilpaketposition mit gleichsinnig abgelegten Dachteilen 3, 4, 5 erreicht. Nun muss das Dachteilpaket bestehend aus den drei Dachteilen 3, 4, 5 von der dargestellten Zwischenposition in den Ablageraum 30 bei geöffnetem Verdeckkastendeckel 25 hineinbefördert werden. Hierzu ist schematisch ein Schwenkhebel 32 angedeutet, der einerseits an der Fahrzeugkarosserie 33 und andererseits im vorderen Bereich des hinteren Dachteils 5 angelenkt ist. Durch Verschwenken des Schwenkhebels 32 in der Zeichnungsebene im Uhrzeigersinn gleitet das Dachteilpaket entlang einer schematisch angedeuteten Führungsschiene 34 in den Ablageraum 31 hinein.

In Fig. 9 ist die Ablageposition der gleichsinnig gestapelten Dachteile 3, 4, 5 im Ablageraum 31 bei geschlossenem Verdeckkastendeckel 25 gezeigt. Der Fahrzeuginnenraum 17 ist nun vollständig offen.

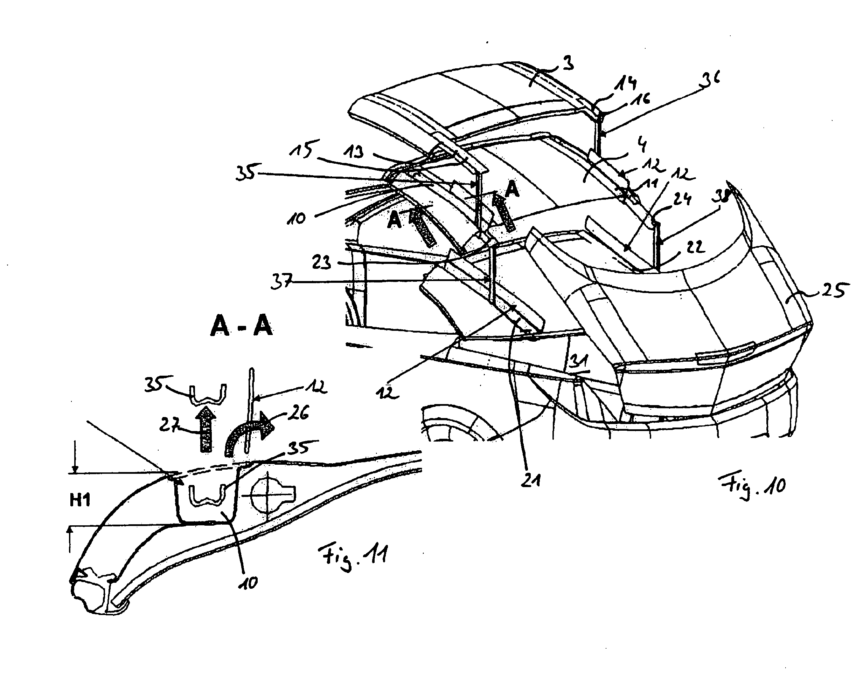

In Fig. 10 ist eine alternative Ausgestaltung der Dachteilkinematiken 7, 8 zwischen dem vorderen Dachteil und dem hinteren Dachteil einerseits und dem mittleren Dachteil und dem hinteren Dachteil 4, 5 andererseits dargestellt.

Die vordere Dachteilkinematik 7 besteht ausschließlich aus zwei Einzellenkern 36, 37, welche sowohl in Fahrzeugquerrichtung, als auch in Fahrzeuglängsrichtung beabstandet zueinander angeordnet sind. Beide Einzellenker 35, 36 sind jeweils im hinteren Endbereich der Anlenkfortsätze 13, 14 mit dem vorderen Dachteil 3 gelenkig verbunden. Dabei ist der in der Zeichnungsebene linke Anlenkfortsatz 13 länger ausgebildet als der in der Zeichnungsebene rechte Anlenkfortsatz 14. Durch diese asymmetrische Ausgestaltung der Dachteilkinematik 7 können die Aufnahmekanäle 10, 11 flacher ausgebildet werden, als bei der Ausführungsform gemäß den Fig. 1 bis 9, da in jedem Aufnahmekanal 10, 11 lediglich ein Einzellenker 35, 36 aufgenommen werden muss.

Die hintere Dachteilkinematik 8 ist in analoger Weise wie die vordere Dachteilkinematik 7 ausgebildet. Die hintere Dachteilkinematik 8 besteht aus zwei sowohl in Fahrzeuglängsrichtung als auch in Fahrzeugquerrichtung beabstandeten Einzellenkern, die gemeinsam eine einzige, seitenübergreifende Viergelenkkinematik bilden. Die Einzellenker 37, 38 sind mit den hinteren Endbereichen der Anlenkfortsätze 23, 24 des mittleren Dachteils verbunden. Dabei ist der in der Zeichnungsebene linke Anlenkfortsatz 23 kürzer ausgebildet als der der Zeichnungsebene rechte Anlenkfortsatz 24. Es befindet sich also jeweils ein langer und ein kurzer Anlenkfortsatz 13, 23 sowie 14, 38 auf jeder Seite.

Die Aufnahmekanäle 10, 11, 21, 22 sind in Schließposition, bei abgelegten Einzellenkern 35, 36, 37, 38 mittels klappbarer Deckel 12 verschließbar. Die Aufnahmekanäle 10, 11 auf der Außenseite des mittleren Dachteils 4 sind in Teilbereichen durch Abdeckschenkel 15, 16 der Anlenkfortsätze 13, 14 verschließbar.

In Fig. 11 ist ein Schnitt entlang der Schnittlinie A-A gemäß Fig. 10 dargestellt. Dabei ist zur Verdeutlichung der geringen Höhe H1 des Aufnahmekanals 10 der Einzellenker 35 einmal innerhalb des Aufnahmekanals 10 und einmal in Pfeilrichtung 27 nach oben verschwenkt dargestellt. Zu erkennen ist außerdem der geöffnete Deckel 12 des Aufnahmekanals 10. Die geringere benötigte Höhe H1 des Aufnahmekanals 10 ist darauf zurückzuführen, dass lediglich ein Einzellenker 35 pro Aufnahmekanal 10 aufgenommen werden muss.

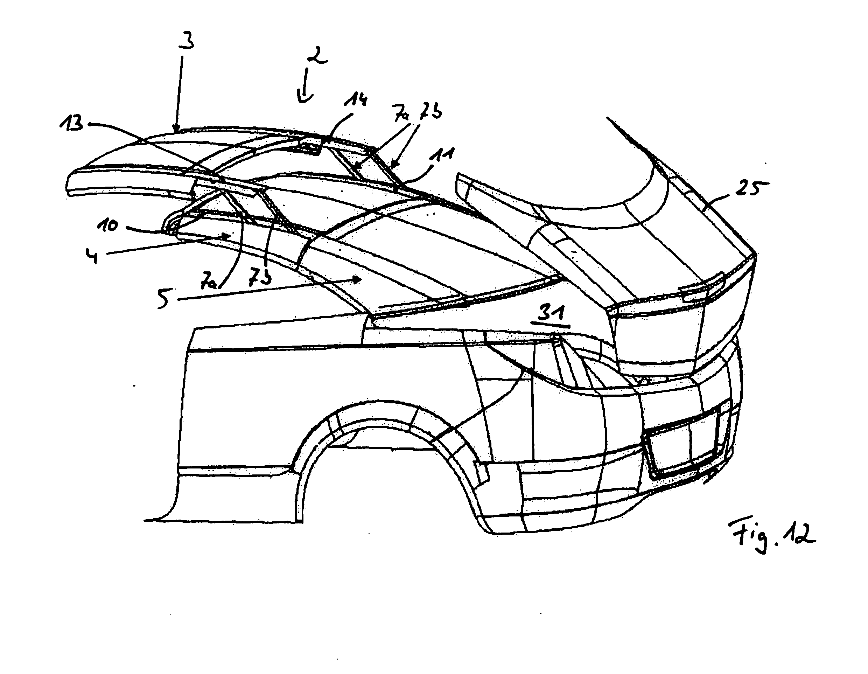

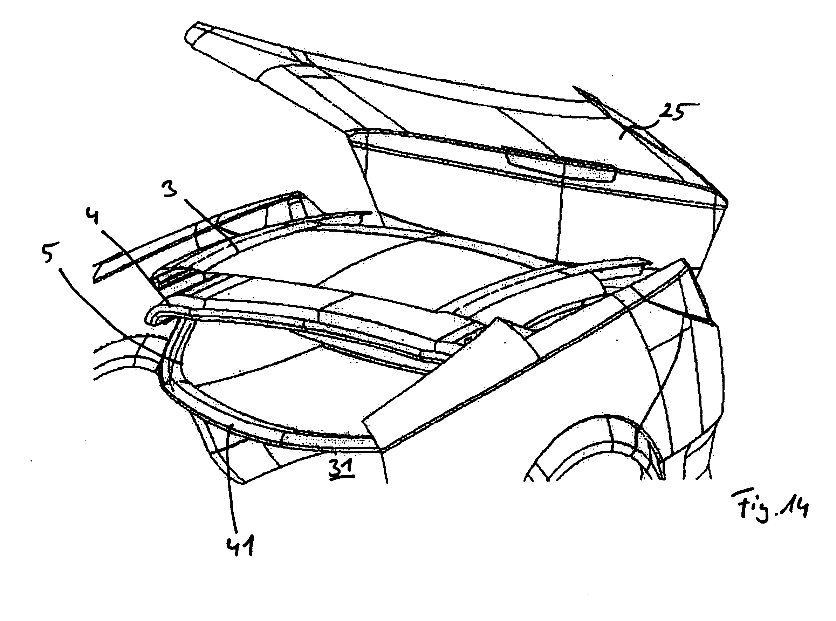

In Fig. 12 ist eine weitere Alternative eines Hardtop-Fahrzeugdaches 2 mit drei starren Dachteilen 3, 4, 5 dargestellt. Das vordere Dachteil 3 ist mit dem mittleren Dachteil 4 in analoger Weise zu dem Ausführungsbeispiel gemäß den Fig. 1 bis 9 verbunden, so dass zur Vermeidung von Wiederholungen bezüglich einer näheren Erläuterung auf die vorangegangene Figurenbeschreibung verwiesen wird. Das hintere Dachteil 5 ist an sich bekannter Weise gelenkig mit dem mittleren Dachteil 4 verbunden, derart, dass es, wie insbesondere aus Fig. 14 ersichtlich ist, gegensinnig zu den beiden Dachteilen 3, 4 in dem Ablageraum 31 ablegbar ist. In Fig. 12 ist das vordere Dach in einer rotatorisch-translatorischen Bewegung aus seiner Schließposition mittels der außerhalb des Fahrzeuginnenraums befindlichen Dachteilkinematik 7 nach oben und in Richtung Fahrzeugheck verschwenkt. Die Lenker 7a, 7b der Dachteilkinematik 7 sind aus den Aufnahmekanälen 10, 11 angehoben, ebenso die mit den Lenkern 7a, 7b gelenkig verbundenen Anlenkfortsätze 13, 14 des vorderen Dachteils 3. Eine Relativbewegung zwischen dem mittleren Dachteil 4 und dem hinteren Dachteil 5 hat zu dem in Fig. 12 dargestellten Zeitpunkt noch nicht stattgefunden.

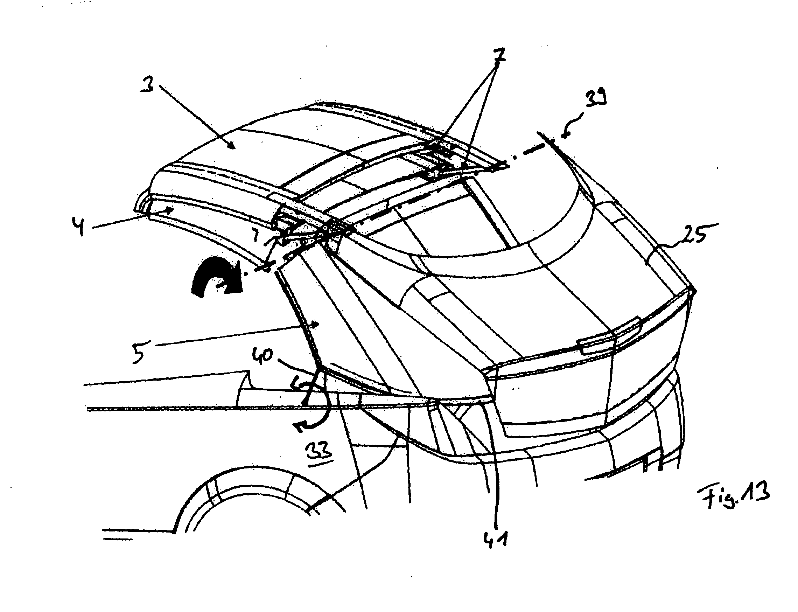

In Fig. 13 ist eine weitere Zwischenposition des Hardtop-Fahrzeugdaches 2 gemäß Fig. 12 dargestellt. Das vordere Dachteil 3 ist auf dem mittleren Dachteil 4 gleichsinnig abgelegt und bildet mit diesem bereits ein Dachteilpaket. Das hintere Dachteil 5 ist aus der Schließposition angehoben und gegenüber dem Dachteilpaket, bestehend aus vorderem und mittlerem Dachteil 3, 4, um eine in Fahrzeugquerrichtung verlaufende Drehachse 39 verschwenkt. Zur Vollführung dieser Verschwenkbewegung ist schematisch ein Drehhebel 40 angedeutet, welcher einerseits an dem hinteren Dachteil 5 und andererseits an der Fahrzeugkarosserie 33 angelenkt ist. Der Drehhebel ist mittels eines nicht dargestellten Aktuators beaufschlagt.

In Fig. 14 ist dargestellt, wie die drei Dachteile 3, 4, 5 im Ablageraum 31 bei noch geöffnetem Verdeckkastendeckel 25 abgelegt sind. Das hintere Dachteil 5 ist gegensinnig zu den anderen beiden Dachteilen 3, 4 abgelegt. Hierzu wurde es noch weiter um die in Fig. 14 nicht gezeigte, jedoch in Fig. 13 eingezeichnete Drehachse 39 verschwenkt. Das in Schließposition hintere Ende 41 des hinteren Dachteils 5 weist in der in Fig. 14 dargestellten Ablageposition in Fahrtrichtung.

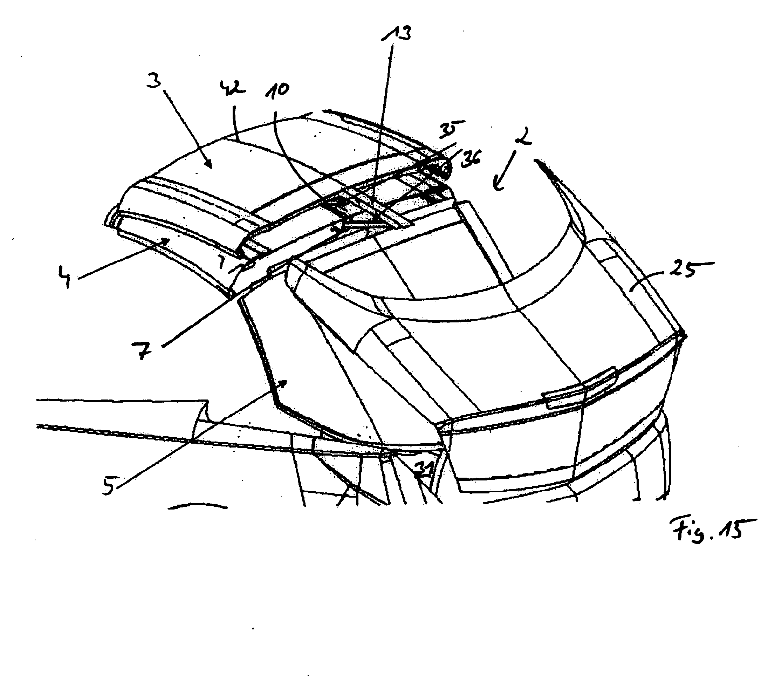

Eine alternative Hardtop-Fahrzeugdachkonstruktion ist in Fig. 15 dargestellt. Die Konstruktion entspricht im Wesentlichen der Ausführungsform gemäß den Fig. 12 bis 14, was die Anlenkung des hinteren Dachteils an der Fahrzeugkarosserie und am mittleren Dachteil betrifft. Zwischen dem vorderen Dachteil 3 und dem mittleren Dachteil 4 ist eine einzige Viergelenkkinematik 7, bestehend aus zwei ausschließlich in Fahrzeuglängsrichtung beabstandeten Lenkern, vorgesehen. Die Viergelenkkinematik ist auf der Längsmittelachse 42 des Hardtop-Fahrzeugdachs 2 angeordnet. Die beiden Lenker 35, 36 sind einerseits in einem mittig auf dem mittleren Dachteil 4 angeordneten und in Fahrzeuglängsrichtung verlaufenden Aufnahmekanal 10 angelenkt. Weiterhin sind die Lenker 35, 36 der einzigen Viergelenkkinematik mit einem in Richtung des mittleren Dachteils ragenden Anlenkfortsatz 13 des vorderen Dachteils 3 gelenkig verbunden. Der Anlenkfortsatz 13 ist in Schließposition in dem Aufnahmekanal 10 aufgenommen. Eine zusätzliche seitliche Abstützung des vorderen Dachteils 3 ist nicht vorgesehen. Es sind jedoch zusätzliche seitliche Stützlenker denkbar, wobei jedoch die Krafteinleitung in die auf der Längsmittelachse 42 befindliche Viergelenkkinematik erfolgen sollte.

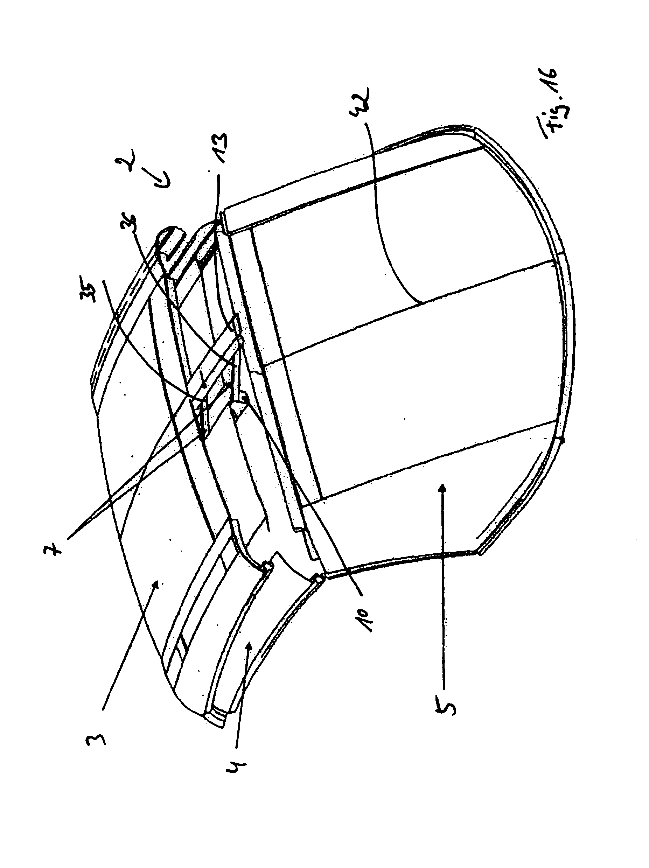

In Fig. 16 ist das Hardtop-Fahrzeugdach 2 gemäß Fig. 15 in Alleinstellung und vergrößert dargestellt. Das vordere Dachteil 3 und das mittlere Dachteil 4 bilden ein Dachteilpaket. In der nicht dargestellten Ablageposition ist das hintere Dachteil 5 gegensinnig zu dem vorderen und dem mittleren Dachteil 4 in einem Ablageraum abgelegt.

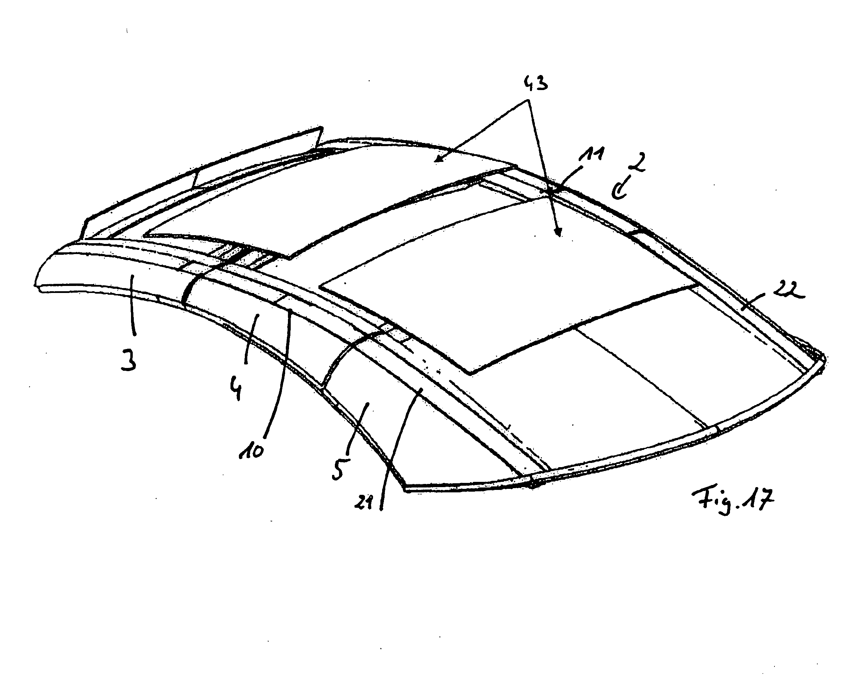

In Fig. 17 ist eine alternative Ausführungsvariante eines Hardtop-Fahrzeugdaches 2 dargestellt. Die Dachteilkinematiken zur Verstellung des vorderen und des mittleren Dachteils 3, 4 sind in Aufnahmekanälen 10, 11 bzw. 21, 22 in Schließposition aufgenommen. In das vordere Dachteil 3 sowie in das mittlere Dachteil 4 sind Schiebedachteile 43 integriert, die in Fahrzeuglängsrichtung dachteilübergreifend verschiebbar ausgebildet sind. Beispielsweise können beide Schiebedächer 43 auf das hintere Dachteil 5 aufgeschoben werden, wodurch jeweils eine Dachöffnung im vorderen Dachteil und im mittleren Dachteil 4 freigegeben wird. Ein derart ausgebildetes Hardtop-Fahrzeugdach kann in Coupéstellung, in Cabrioletstellung sowie mit geöffneten Schiebedachteilen 43 betrieben werden. Am vorderen Rand des vorderen Dachteils 3 verläuft in Fahrzeugquerrichtung ein klappbarer Windabweiser.

## Patentansprüche

1. Hardtop-Fahrzeugdach mit mindestens zwei starren Dachteilen (3, 4, 5), wobei mindestens ein Dachteil (3, 4, 5) mittels einer Dachteilkinematik (7, 8) zwischen einer den Fahrzeuginnenraum (17) überdeckenden Schließposition, in der die Dachteile (3, 4, 5) in Fahrtrichtung hintereinander angeordnet sind, und einer den Fahrzeuginnenraum (17) freigebenden Ablageposition verstellbar ist, und wobei die Dachteilkinematik (7, 8) als Lenkeranordnung ausgebildet ist, die mehrere Lenker (7a, 7b, 8a, 8b) umfasst, die auf der Außenseite des einen, ersten Dachteiles (3, 4, 5) innerhalb von in Fahrzeuglängsrichtung verlaufenden, nach oben offenen Aufnahmekanälen (10, 11; 21, 22) angelenkt und in der Schließposition des Dachteiles (3, 4, 5) auf dessen vom Fahrzeuginnenraum (17) abgewandter Außenseite (9, 20) in den Aufnahmekanälen (10, 11; 21, 22) aufgenommen angeordnet sind,
**dadurch gekennzeichnet,**
**dass** sämtliche Lenker (7a, 7b, 8a, 8b) der Dachteilkinematik (7, 8) innerhalb des jeweiligen Aufnahmekanals (10, 11; 21, 22) angelenkt und auf der vom Fahrzeuginnenraum (17) abgewandten Außenseite des Dachteiles (3, 4, 5) angeordnet sind.

2. Hardtop-Fahrzeugdach nach Anspruch 1,
**dadurch gekennzeichnet,**
**dass** die Aufnahmekanäle (10, 11; 21, 22) in mindestens ein Dachteil (3, 4, 5) eingeformt sind.

3. Hardtop-Fahrzeugdach nach Anspruch 1 oder 2,
**dadurch gekennzeichnet,**
**dass** sich die Aufnahmekanäle (10, 11; 21, 22) vom vorderen Rand (18) bis zum hinteren Rand (19) eines Dachteiles (3, 4, 5) erstrecken.

4. Hardtop-Fahrzeugdach nach einem der Ansprüche 1 bis 3,
**dadurch gekennzeichnet,**
**dass** die Aufnahmekanäle (10, 11; 21, 22) verschließbar ausgebildet sind.

5. Hardtop-Fahrzeugdach nach Anspruch 4,
**dadurch gekennzeichnet,**
**dass** die Aufnahmekanäle (10, 11, 21, 22) mittels mindestens eines Deckels (12) verschließbar sind

6. Hardtop-Fahrzeugdach nach einem der vorhergehenden Ansprüche,
**dadurch gekennzeichnet,**
**dass** die beiden mittels der Dachteilkinematik (7, 8) relativ zueinander verstellbaren Dachteile (3, 4, 5) in Ablageposition übereinander liegen und ein Dachteilpaket bilden.

7. Hardtop-Fahrzeugdach nach einem der Ansprüche 1 bis 6,
**dadurch gekennzeichnet,**
**dass** sämtliche Lenker (7a, 7b, 8a, 8b) der Dachteilkinematik (7, 8) bei der Verschwenkung des Dachteiles (3, 4, 5) aus seiner Schließposition hin zu seiner Ablageposition ausschließlich in einem Bereich außerhalb des Fahrzeuginnenraumes (17) verschwenkbar sind.

8. Hardtop-Fahrzeugdach nach einem der Ansprüche 1 bis 7,
**dadurch gekennzeichnet,**
**dass** zumindestens ein Lenker (7a, 7b, 8a, 8b) der Dachteilkinematik (7, 8) an mindestens einem das zweite Dachteil (3, 4, 5) in Richtung des ersten Dachteiles (3, 4, 5) überragenden Anlenkfortsatzes (13, 14; 23, 24) des zweiten Dachteiles (3, 4, 5) angelenkt ist.

9. Hardtop-Fahrzeugdach nach Anspruch 8,
**dadurch gekennzeichnet,**
**dass** sämtliche Lenker (7a, 7b, 8a, 8b) der Dachteilkinematik (7, 8) an mindestens einem das zweite Dachteil (3, 4, 5) in Richtung auf das erste Dachteil (3, 4, 5) überragenden Anlenkfortsatz (13, 14; 23, 24) des zweiten Dachteils (3, 4, 5) angelenkt sind.

10. Hardtop-Fahrzeugdach nach Anspruch 8 oder 9,
**dadurch gekennzeichnet,**
**dass** der Anlenkfortsatz (13, 14, 23, 24) in Schließposition des Dachteiles (3, 4, 5) in dem jeweiligen Aufnahmekanal (10, 11; 21, 22) aufgenommen ist.

11. Hardtop-Fahrzeugdach nach Anspruch 10,
**dadurch gekennzeichnet,**
**dass** der Anlenkfortsatz (13, 14; 23, 24) in Schließposition des Dachteiles (3, 4, 5) in dem Aufnahmekanal (10, 11; 21, 22) abgestützt ist.

12. Hardtop-Fahrzeugdach nach einem der Ansprüche 8 bis 11,
**dadurch gekennzeichnet,**
**dass** der Anlenkfortsatz (13, 14; 23, 24) einen Abdeckschenkel (15, 16) aufweist, der den Aufnahmekanal (10, 11; 21, 22) im Bereich des Anlenkfortsatzes (13, 14; 23, 24) in Schließposition der Dachteile (3, 4, 5) oben verschließt.

13. Hardtop-Fahrzeugdach nach einem der vorhergehenden Ansprüche,
**dadurch gekennzeichnet,**
**dass** an mindestens einem Dachteil (3, 4, 5) zwischen der Außenseite (9, 20) und einer Dachinnenverkleidung (29) des Dachteils (3, 4, 5) mindestens ein Antrieb (30) zum Verstellen der Dachteilkinematik (7, 8) vorgesehen ist.

14. Hardtop-Fahrzeugdach nach einem der vorhergehenden Ansprüche,
**dadurch gekennzeichnet,**
**dass** die Dachteilkinematik (7, 8) mindestens eine Mehrgelenkkinematik umfasst.

15. Hardtop-Fahrzeugdach nach Anspruch 14,
**dadurch gekennzeichnet,**
**dass** die Dachteilkinematik (7, 8) eine Viergelenkkinematik umfasst.

16. Hardtop-Fahrzeugdach nach einem der Ansprüche 14 oder 15,
**dadurch gekennzeichnet,**
**dass** die Mehrgelenkkinematik auf der Längsmittelachse (42) angeordnet ist und dass die Krafteinleitung mittels eines Antriebs in diese Mehrgelenkkinematik erfolgt.

17. Hardtop-Fahrzeugdach nach Anspruch 16,
**dadurch gekennzeichnet,**
**dass** die Dachteilkinematik (7, 8) aus mindestens zwei beabstandeten Mehrgelenkkinematiken gebildet ist.

18. Hardtop-Fahrzeugdach nach einem der Ansprüche 1 bis 13,
**dadurch gekennzeichnet,**
**dass** die Dachteilkinematik (7, 8) aus zwei beabstandeten Einzellenkern (35, 36, 37, 38) besteht, die gemeinsam eine Viergelenkkinematik bilden.

19. Hardtop-Fahrzeugdach nach Anspruch 18,
**dadurch gekennzeichnet,**
**dass** die beiden Einzellenker (35, 36, 37, 38) sowohl in Fahrzeuglängsrichtung als auch in Fahrzeugquerrichtung beabstandet angeordnet sind.

20. Hardtop-Fahrzeugdach nach einem der Ansprüche 18 oder 19,
**dadurch gekennzeichnet,**
**dass** für jeden Einzellenker (35, 36, 37, 38) ein eigener Aufnahmekanal (10, 11; 21, 22) vorgesehen ist.

21. Hardtop-Fahrzeugdach nach Anspruch 18,
**dadurch gekennzeichnet,**
**dass** die Einzellenker (35, 36, 37, 38) ausschließlich in Fahrzeuglängsrichtung beabstandet angeordnet sind.

22. Hardtop-Fahrzeugdach nach Anspruch 21,
**dadurch gekennzeichnet,**
**dass** ein gemeinsamer Aufnahmekanal (10, 11; 21, 22) für beide Lenker (35, 36, 37, 38) vorgesehen ist.

23. Hardtop-Fahrzeugdach nach Anspruch 21 oder 22,
**dadurch gekennzeichnet,**
**dass** die Lenker (7a, 7b, 8a, 8b) auf der Längsmittelachse des Hardtop-Fahrzeugdaches (2) angeordnet sind.

24. Hardtop-Fahrzeugdach nach einem der vorhergehenden Ansprüche,
**dadurch gekennzeichnet,**
**dass** das Hardtop-Fahrzeugdach (2) als dreiteiliges Dach mit einem in Schließposition vorderen, mittleren und hinteren Dachteil (3, 4, 5) ausgebildet ist.

25. Hardtop-Fahrzeugdach nach Anspruch 24,
**dadurch gekennzeichnet,**
**dass** mindestens ein Aufnahmekanal (10, 11) im mittleren Dachteil (4) zur Aufnahme der Dachteilkinematik (7) zwischen dem vorderen und dem mittleren Dachteil (3, 4) und/oder mindestens ein Aufnahmekanal (21, 22) im hinteren Dachteil (5) zur Aufnahme der Dachteilkinematik (8) zwischen dem mittleren und dem hinteren Dachteil (4, 5) vorgesehen ist.

26. Hardtop-Fahrzeugdach nach einem der Ansprüche 24 oder 25,
**dadurch gekennzeichnet,**
**dass** sämtliche Lenker (7a, 7b) der Dachteilkinematik (7) zwischen dem vorderen und dem mittleren Dachteil (3, 4) einerseits auf der Außenseite (9) des mittleren Dachteils (4) innerhalb des Aufnahmekanals (10, 11) des mittleren Dachteils (4) und andererseits an mindestens einem in Richtung des mittleren Dachteils (4) weisenden Anlenkfortsatz (13, 14) des vorderen Dachteils (3) angelenkt sind und/oder dass sämtliche Lenker (8a, 8b) der Dachteilkinematik (8) zwischen dem hinteren und dem mittleren Dachteil (4, 5) einerseits auf der Außenseite (20) des hinteren Dachteils (5) innerhalb des Aufnahmekanals (21, 22) des hinteren Dachteils (5) und andererseits an mindestens einem in Richtung des hinteren Dachteils (5) weisenden Anlenkfortsatz (23, 24) des mittleren Dachteils (4) angelenkt sind.

27. Hardtop-Fahrzeugdach nach einem der Ansprüche 24 bis 26,
**dadurch gekennzeichnet,**
**dass** alle Dachteile (3, 4, 5) in Ablageposition gleichsinnig mit nach oben gerichteter Dachaußenseite im Dachteilpaket übereinander abgelegt sind.

28. Hardtop-Fahrzeugdach nach Anspruch 24,
**dadurch gekennzeichnet,**
**dass** mindestens ein Aufnahmekanal (10, 11) im mittleren Dachteil (4) zur Aufnahme der Dachteilkinematik (7) zwischen dem vorderen und dem mittleren Dachteil (3, 4) vorgesehen ist.

29. Hardtop-Fahrzeugdach nach Anspruch 24 oder 28,
dass sämtliche Lenker (7a, 7b), der Dachteilkinematik (7) zwischen dem vorderen und dem mittleren Dachteil (3, 4) einerseits auf der Außenseite (9) des mittleren Dachteils (4) innerhalb des Aufnahmekanals (10) des mittleren Dachteils (4) und andererseits an einem in Richtung des mittleren Dachteils (4) weisenden Anlenkfortsatz (13, 14) des vorderen Dachteils (3) angelenkt sind, dass das vordere und das mittlere Dachteil (3, 4) in Ablageposition gleichsinnig mit nach oben gerichteter Dachaußenseite im Dachteilpaket übereinander abgelegt sind, und dass das hintere Dachteil (5) gegensinnig zu den anderen Dachteilen (3, 4) im Dachteilpaket an unterster Stelle abgelegt ist.

30. Hardtop-Fahrzeugdach nach einem der Ansprüche 6 bis 29,
**dadurch gekennzeichnet,**
**dass** das Dachteilpaket in einem Ablageraum (31) ablegbar ist.

31. Hardtop-Fahrzeugdach nach einem der vorhergehenden Ansprüche,
**dadurch gekennzeichnet,**
**dass** in mindestens einem Dachteil (3, 4, 5) ein Schiebedach (43) integriert ist.

## Claims

1. Hardtop vehicle roof with at least two rigid roof parts (3, 4, 5), wherein at least one roof part (3, 4, 5) is displaceable by means of a roof-part kinematic system (7, 8) between a closed position which covers the vehicle interior (17) and in which the roof parts (3, 4, 5) are arranged consecutively in the direction of travel, and a storage position opening up the vehicle interior (17), and wherein the roof-part kinematic system (7, 8) is designed as a link arrangement which comprises a plurality of links (7a, 7b, 8a, 8b) which are articulated on the outer side of the one, first roof part (3, 4, 5) within upwardly open receiving channels (10, 11; 21, 22) running in the longitudinal direction of the vehicle and, in the closed position of the roof part (3, 4, 5), are accommodated in the receiving channels (10, 11; 21, 22) on the outer side (9, 20) of said roof part, which side faces away from the vehicle interior (17), **characterized in that** all of the links (7a, 7b, 8a, 8b) of the roof-part kinematic system (7, 8) are articulated within the respective receiving channel (10, 11; 21 22) and are arranged on the outer side of the roof part (3, 4, 5), which side faces away from the vehicle interior (17).

2. Hardtop vehicle roof according to Claim 1,
**characterized in that** the receiving channels (10, 11; 21, 22) are moulded into at least one roof part (3, 4, 5).

3. Hardtop vehicle roof according to Claim 1 or 2, **characterized in that** the receiving channels (10, 11; 21, 22) extend from the front edge (18) as far as the rear edge (19) of a roof part (3, 4, 5).

4. Hardtop vehicle roof according to one of Claims 1 to 3, **characterized in that** the receiving channels (10, 11; 21, 22) are of closable design.

5. Hardtop vehicle roof according to Claim 4,
**characterized in that** the receiving channels (10, 11, 21, 22) are closable by means of at least one cover (12).

6. Hardtop vehicle roof according to one of the preceding claims, **characterized in that** the two roof parts (3, 4, 5) which are displaceable relative to each other by means of the roof-part kinematic system (7, 8) lie one above the other in the storage position and form a roof-part package.

7. Hardtop vehicle roof according to one of Claims 1 to 6, **characterized in that**, during the pivoting of the roof part (3, 4, 5) out of the closed position thereof towards the storage position thereof, all of the links (7a, 7b, 8a, 8b) of the roof-part kinematic system (7, 8) are pivotable exclusively in a region outside the vehicle interior (17).

8. Hardtop vehicle roof according to one of Claims 1 to 7, **characterized in that** at least one link (7a, 7b, 8a, 8b) of the roof-part kinematic system (7, 8) is articulated on at least one articulated extension (13, 14; 23, 24) of the second roof part (3, 4, 5), which articulated extension protrudes over the second roof part (3, 4, 5) in the direction of the first roof part (3, 4, 5).

9. Hardtop vehicle roof according to Claim 8,
**characterized in that** all of the links (7a, 7b, 8a, 8b) of the roof-part kinematic system (7, 8) are articulated on at least one articulated extension (13, 14; 23, 24) of the second roof part (3, 4, 5), which articulated extension protrudes over the second roof part (3, 4, 5) in the direction of the first roof part (3, 4, 5).

10. Hardtop vehicle roof according to Claim 8 or 9, **characterized in that**, in the closed position of the roof part (3, 4, 5), the articulated extension (13, 14; 23, 24) is accommodated in the respective receiving channel (10, 11; 21, 22).

11. Hardtop vehicle roof according to Claim 10,
**characterized in that**, in the closed position of the roof part (3, 4, 5), the articulated extension (13, 14; 23, 24) is supported in the receiving channel (10, 11; 21, 22).

12. Hardtop vehicle roof according to one of Claims 8 to 11, **characterized in that** the articulated extension (13, 14; 23, 24) has a covering limb (15, 16) which upwardly closes the receiving channel (10, 11; 21, 22) in the region of the articulated extension (13, 14; 23, 24) in the closed position of the roof parts (3, 4, 5).

13. Hardtop vehicle roof according to one of the preceding claims, **characterized in that** at least one drive (30) for displacing the roof-part kinematic system (7, 8) is provided on at least one roof part (3, 4, 5) between the outer side (9, 20) and an inner roof lining (29) of the roof part (3, 4, 5).

14. Hardtop vehicle roof according to one of the preceding claims, **characterized in that** the roof-part kinematic system (7, 8) comprises at least one multi-bar-linkage kinematic system.

15. Hardtop vehicle roof according to Claim 14,
**characterized in that** the roof-part kinematic system (7, 8) comprises a four-bar-linkage kinematic system.

16. Hardtop vehicle roof according to either of Claims 14 and 15, **characterized in that** the multi-bar-linkage kinematic system is arranged on the longitudinal centre axis (42), and **in that** force is introduced into said multi-bar-linkage kinematic system by means of a drive.

17. Hardtop vehicle roof according to Claim 16,
**characterized in that** the roof-part kinematic system (7, 8) is formed from at least two spaced-apart multi-bar-linkage kinematic systems.

18. Hardtop vehicle roof according to one of claims 1 to 13, **characterized in that** the roof-part kinematic system (7, 8) comprises two spaced-apart individual links (35, 36, 37, 38) which together form a four-bar-linkage kinematic system.

19. Hardtop vehicle roof according to Claim 18,
**characterized in that** the two individual links (35, 36, 37, 38) are spaced apart both in the longitudinal direction of the vehicle and in the transverse direction of the vehicle.

20. Hardtop vehicle roof according to either of Claims 18 and 19, **characterized in that** a dedicated receiving channel (10, 11; 21, 22) is provided for each individual link (35, 36, 37, 38).

21. Hardtop vehicle roof according to Claim 18,
**characterized in that** the individual links (35, 36, 37, 38) are spaced apart exclusively in the longitudinal direction of the vehicle.

22. Hardtop vehicle roof according to Claim 21,
**characterized in that** a common receiving channel (10, 11; 21, 22) is provided for both links (35, 36, 37, 38).

23. Hardtop vehicle roof according to Claim 21 or 22, **characterized in that** the links (7a, 7b, 8a, 8b) are arranged on the longitudinal centre axis of the hardtop vehicle roof (2).

24. Hardtop vehicle roof according to one of the preceding claims, **characterized in that** the hardtop vehicle roof (2) is designed as a three-part roof with a front, middle and rear roof part (3, 4, 5) in the closed position.

25. Hardtop vehicle roof according to Claim 24,
**characterized in that** at least one receiving channel (10, 11) is provided in the middle roof part (4) for receiving the roof-part kinematic system (7) between the front and the middle roof parts (3, 4), and/or at least one receiving channel (21, 22) is provided in the rear roof part (5) to receive the roof-part kinematic system (8) between the middle and the rear roof parts (4, 5).

26. Hardtop vehicle roof according to either of Claims 24 and 25, **characterized in that** all of the links (7a, 7b) of the roof-part kinematic system (7) between the front and middle roof parts (3, 4) are articulated at one end on the outer side (9) of the middle roof part (4) within the receiving channel (10, 11) of the middle roof part (4) and at the other end on at least one articulated extension (13, 14) of the front roof part (3), which articulated extension points in the direction of the middle roof part (4), and/or **in that** all of the links (8a, 8b) of the roof-part kinematic system (8) between the rear and the middle roof parts (4, 5) are articulated at one end on the outer side (20) of the rear roof part (5) within the receiving channel (21, 22) of the rear roof part (5) and at the other end on at least one articulated extension (23, 24) of the middle roof part (4), which articulated extension points in the direction of the rear roof part (5).

27. Hardtop vehicle roof according to one of Claims 24 to 26, **characterized in that**, in the storage position, all of the roof parts (3, 4, 5) are stored one above another in the same direction, with the outer side of the roof directed upwards, in the roof-part package.

28. Hardtop vehicle roof according to Claim 24,
**characterized in that** at least one receiving channel (10, 11) is provided in the middle roof part (4) to receive the roof-part kinematic system (7) between the front and the middle roof parts (3, 4).

29. Hardtop vehicle roof according to Claim 24 or 28, **characterized in that** all of the links (7a, 7b) of the roof-part kinematic system (7) between the front and middle roof parts (3, 4) are articulated at one end on the outer side (9) of the middle roof part (4) within the receiving channel (10) of the middle roof part (4) and at the other end on articulated extension (13, 14) of the front roof part (3), which articulated extension points in the direction of the middle roof part (4), **in that** in the storage position, the front and the middle roof parts (3, 4) are stored one above another in the same direction, with the outer side of the roof directed upwards, in the roof-part package, and **in that** the rear roof part (5) is stored at the lowermost point in the roof-part package in the opposite direction to the other roof parts (3, 4).

30. Hardtop vehicle roof according to one of Claims 6 to 29, **characterized in that** the roof-part package is storable in a storage space (31).

31. Hardtop vehicle roof according to one of the preceding claims, **characterized in that** a sliding roof (43) is integrated in at least one roof part (3, 4, 5).

## Revendications

1. Toit rigide de véhicule, comprenant au moins deux parties de toit rigides (3, 4, 5), au moins une partie de toit (3, 4, 5) pouvant être déplacée au moyen d'une cinématique de partie de toit (7, 8) entre une position de fermeture recouvrant l'habitacle du véhicule (17), dans laquelle les parties de toit (3, 4, 5) sont disposées l'une derrière l'autre dans la direction de conduite, et une position de rangement libérant l'habitacle du véhicule (17), la cinématique de partie de toit (7, 8) étant réalisée sous forme d'agencement de bras oscillants qui comprend plusieurs bras oscillants (7a, 7b, 8a, 8b), qui sont articulés sur le côté extérieur d'une première partie de toit (3, 4, 5) à l'intérieur de canaux de réception ouverts vers le haut (10, 11 ; 21, 22) s'étendant dans la direction longitudinale du véhicule, et qui sont disposés et reçus dans la position de fermeture de la partie de toit (3, 4, 5) sur son côté extérieur (9, 20) opposé à l'habitacle du véhicule (17) dans les canaux de réception (10, 11 ; 21, 22),
**caractérisé en ce que**
tous les bras oscillants (7a, 7b, 8a, 8b) de la cinématique de partie de toit (7, 8) sont articulés à l'intérieur du canal de réception respectif (10, 11 ; 21, 22) et sont disposés sur le côté extérieur de la partie de toit (3, 4, 5) opposé à l'habitacle du véhicule (17).

2. Toit rigide de véhicule selon la revendication 1,
**caractérisé en ce que**
les canaux de réception (10, 11 ; 21, 22) sont formés dans au moins une partie de toit (3, 4, 5).

3. Toit rigide de véhicule selon la revendication 1 ou 2,
**caractérisé en ce que**
les canaux de réception (10, 11 ; 21, 22) s'étendent depuis le bord avant (18) jusqu'au bord arrière (19) d'une partie de toit (3, 4, 5).

4. Toit rigide de véhicule selon l'une quelconque des revendications 1 à 3,
**caractérisé en ce que**
les canaux de réception (10, 11 ; 21, 22) sont réalisés de manière à pouvoir être fermés.

5. Toit rigide de véhicule selon la revendication 4,
**caractérisé en ce que**
les canaux de réception (10, 11 ; 21, 22) peuvent être fermés au moyen d'au moins un couvercle (12).

6. Toit rigide de véhicule selon l'une quelconque des revendications précédentes,
**caractérisé en ce que**
les deux parties de toit (3, 4, 5) déplaçables l'une par rapport à l'autre au moyen de la cinématique de partie de toit (7, 8) sont situées l'une au-dessus de l'autre dans la position de rangement et forment un paquet de parties de toit.

7. Toit rigide de véhicule selon l'une quelconque des revendications 1 à 6,
**caractérisé en ce que**
tous les bras oscillants (7a, 7b, 8a, 8b) de la cinématique de partie de toit (7, 8), lors du pivotement de la partie de toit (3, 4, 5) de sa position de fermeture dans sa position de rangement, peuvent pivoter exclusivement dans une région en dehors de l'habitacle du véhicule (17).

8. Toit rigide de véhicule selon l'une quelconque des revendications 1 à 7,
**caractérisé en ce**
**qu'**au moins un bras oscillant (7a, 7b, 8a, 8b) de la cinématique de partie de toit (7, 8) est articulé à au moins une saillie d'articulation (13, 14 ; 23, 24) de la deuxième partie de toit (3, 4, 5) dépassant de la deuxième partie de toit (3, 4, 5) dans la direction de la première partie de toit (3, 4, 5).

9. Toit rigide de véhicule selon la revendication 8,
**caractérisé en ce que**
tous les bras oscillants (7a, 7b, 8a, 8b) de la cinématique de partie de toit (7, 8) sont articulés à au moins une saillie d'articulation (13, 14 ; 23, 24) de la deuxième partie de toit (3, 4, 5) dépassant de la deuxième partie de toit (3, 4, 5) dans la direction de la première partie de toit (3, 4, 5).

10. Toit rigide de véhicule selon la revendication 8 ou 9,
**caractérisé en ce que**
la saillie d'articulation (13, 14 ; 23, 24) est reçue dans la position de fermeture de la partie de toit (3, 4, 5) dans le canal de réception respectif (10, 11 ; 21, 22).

11. Toit rigide de véhicule selon la revendication 10,
**caractérisé en ce que**
la saillie d'articulation (13, 14 ; 23, 24) est supportée dans la position de fermeture de la partie de toit (3, 4, 5) dans le canal de réception (10, 11 ; 21, 22).

12. Toit rigide de véhicule selon l'une quelconque des revendications 8 à 11,
**caractérisé en ce que**
la saillie d'articulation (13, 14 ; 23, 24) présente une branche de recouvrement (15, 16) qui ferme vers le haut le canal de réception (10, 11 ; 21, 22) dans la région de la saillie d'articulation (13, 14 ; 23, 24) dans la position de fermeture des parties de toit (3, 4, 5).

13. Toit rigide de véhicule selon l'une quelconque des revendications précédentes,
**caractérisé en ce que**
l'on prévoit sur au moins une partie de toit (3, 4, 5) entre le côté extérieur (9, 20) et un habillage interne du toit (29) de la partie de toit (3, 4, 5), au moins un entraînement (30) pour le déplacement de la cinématique de partie de toit (7, 8).

14. Toit rigide de véhicule selon l'une quelconque des revendications précédentes,
**caractérisé en ce que**
la cinématique de partie de toit (7, 8) comprend au moins une cinématique à articulations multiples.

15. Toit rigide de véhicule selon la revendication 14,
**caractérisé en ce que**
la cinématique de partie de toit (7, 8) comprend une cinématique à quadrilatère articulé.

16. Toit rigide de véhicule selon l'une quelconque des revendications 14 ou 15,
**caractérisé en ce que**
la cinématique à articulations multiples est disposée sur l'axe médian longitudinal (42) et **en ce que** l'introduction de forces s'effectue au moyen d'un entraînement dans cette cinématique à articulations multiples.

17. Toit rigide de véhicule selon la revendication 16,
**caractérisé en ce que**
la cinématique de partie de toit (7, 8) est formée d'au moins deux cinématiques à articulations multiples espacées.

18. Toit rigide de véhicule selon l'une quelconque des revendications 1 à 13,
**caractérisé en ce que**
la cinématique de partie de toit (7, 8) se compose de deux bras oscillants individuels espacés (35, 36, 37, 38) qui forment ensemble une cinématique à quadrilatère articulé.

19. Toit rigide de véhicule selon la revendication 18,
**caractérisé en ce que**
les deux bras oscillants individuels (35, 36, 37, 38) sont disposés de manière espacée à la fois dans la direction longitudinale du véhicule et dans la direction transversale du véhicule.

20. Toit rigide de véhicule selon l'une quelconque des revendications 18 ou 19,
**caractérisé en ce que**
pour chaque bras oscillant individuel (35, 36, 37, 38), on prévoit un canal de réception propre (10, 11 ; 21, 22).

21. Toit rigide de véhicule selon la revendication 18,
**caractérisé en ce que**
les bras oscillants individuels (35, 36, 37, 38) sont disposés de manière espacée exclusivement dans la direction longitudinale du véhicule.

22. Toit rigide de véhicule selon la revendication 21,
**caractérisé en ce que**
l'on prévoit un canal de réception commun (10, 11 ; 21, 22) pour les deux bras oscillants (35, 36, 37, 38).

23. Toit rigide de véhicule selon la revendication 21 ou 22, **caractérisé en ce que**
les bras oscillants (7a, 7b, 8a, 8b) sont disposés sur l'axe médian longitudinal du toit rigide de véhicule (2).

24. Toit rigide de véhicule selon l'une quelconque des revendications précédentes, **caractérisé en ce que**
le toit rigide de véhicule (2) est réalisé sous forme de toit en trois parties avec une partie de toit avant, centrale et arrière (3, 4, 5), dans la position de fermeture.

25. Toit rigide de véhicule selon la revendication 24,
**caractérisé en ce**
**qu'**au moins un canal de réception (10, 11) est prévu dans la partie de toit centrale (4) pour recevoir la cinématique de partie de toit (7) entre la partie de toit avant et centrale (3, 4), et/ou au moins un canal de réception (21, 22) est prévu dans la partie de toit arrière (5) pour recevoir la cinématique de partie de toit (8) entre la partie de toit centrale et arrière (4, 5).

26. Toit rigide de véhicule selon l'une quelconque des revendications 24 ou 25,
**caractérisé en ce que**
tous les bras oscillants (7a, 7b) de la cinématique de partie de toit (7) sont articulés entre la partie de toit avant et centrale (3, 4) d'une part du côté extérieur (9) de la partie de toit centrale (4) à l'intérieur du canal de réception (10, 11) de la partie de toit centrale (4), et d'autre part à au moins une saillie d'articulation (13, 14) de la partie de toit avant (3) tournée dans la direction de la partie de toit centrale (4) et/ou **en ce que** tous les bras oscillants (8a, 8b) de la cinématique de partie de toit (8) sont articulés entre la partie de toit arrière et centrale (4, 5) d'une part du côté extérieur (20) de la partie de toit arrière (5) à l'intérieur du canal de réception (21, 22) de la partie de toit arrière (5) et d'autre part à au moins une saillie d'articulation (23, 24) de la partie de toit centrale (4) tournée dans la direction de la partie de toit arrière (5).

27. Toit rigide de véhicule selon l'une quelconque des revendications 24 à 26, **caractérisé en ce que**
toutes les parties de toit (3, 4, 5) sont disposées l'une au-dessus de l'autre dans un paquet de parties de toit dans la position de rangement, dans le même sens avec le côté extérieur du toit orienté vers le haut.

28. Toit rigide de véhicule selon la revendication 24,
**caractérisé en ce**
**qu'**au moins un canal de réception (10, 11) est prévu dans la partie de toit centrale (4) pour recevoir la cinématique de partie de toit (7) entre la partie de toit avant et centrale (3, 4).

29. Toit rigide de véhicule selon la revendication 24 ou 28,
**caractérisé en ce que**
tous les bras oscillants (7a, 7b) de la cinématique de partie de toit (7) sont articulés entre la partie de toit avant et centrale (3, 4) d'une part du côté extérieur (9) de la partie de toit centrale (4) à l'intérieur du canal de réception (10) de la partie de toit centrale (4), et d'autre part à une saillie d'articulation (13, 14) de la partie de toit avant (3) tournée dans la direction de la partie de toit centrale (4), **en ce que** la partie de toit avant et centrale (3, 4) sont disposées l'une au-dessus de l'autre dans le paquet de parties de toit dans la position de rangement, dans le même sens avec le côté extérieur du toit orienté vers le haut, et **en ce que** la partie de toit arrière (5) est disposée dans le sens opposé aux autres parties de toit (3, 4) dans le paquet de parties de toit, dans la position inférieure.

30. Toit rigide de véhicule selon l'une quelconque des revendications 6 à 29, **caractérisé en ce que**
le paquet de parties de toit peut être disposé dans un espace de rangement (31).

31. Toit rigide de véhicule selon l'une quelconque des revendications précédentes, **caractérisé en ce**
**qu'**un toit coulissant (43) est intégré dans au moins une partie de toit (3, 4, 5).
